# EUROPÄISCHE PATENTSCHRIFT

(11) **EP 1 948 542 B1**
(45) Veröffentlichungstag und Bekanntmachung des Hinweises auf die Patenterteilung: **12.08.2009**
(21) Anmeldenummer: 06819109.7
(22) Anmeldetag: 20.10.2006
(51) Int. Cl.: B65G 47/84, B65G 29/00

(54) **ÜBERGABEVORRICHTUNG ZUM UMORIENTIEREN VON STÜCKGÜTERN**
TRANSFER ARRANGEMENT FOR REPOSITIONING ARTICLES
DISPOSITIF DE TRANSFERT POUR REORIENTER DES OBJETS AU DETAIL

(30) Priorität: 10.11.2005 DE 102005054005
(43) Veröffentlichungstag der Anmeldung: 30.07.2008
(73) Patentinhaber: ROBERT BOSCH GMBH, 70442 Stuttgart (DE)
(72) Erfinder: LENHERR, Harald, CH-8222 Beringen (CH)
(86) Internationale Anmeldenummer: PCT/EP2006/067616
(87) Internationale Veröffentlichungsnummer: WO 2007/054426

(56) Entgegenhaltungen:
- DE-A1- 2 551 538
- US-A- 4 558 778

## Beschreibung

### Stand der Technik

Die Erfindung betrifft eine Übergabevorrichtung zum Ergreifen von Stückgütern von einem ersten in eine erste Richtung weisenden Zufuhrförderer, und nachfolgenden Ablegen derselben auf einem zweiten in eine zweite Richtung weisenden Abfuhrförderer, wobei insbesondere die erste und die zweite Richtung rechtwinklig zueinander stehen können.

Aus dem Stand der Technik sind seit langem eine Reihe solcher Vorrichtungen bekannt. Beispielsweise zeigt die DE 25 51 538 eine solche Vorrichtung nach dem Oberbegriff des Anspruchs 1. Die dort beschriebene Übergabevorrichtung soll leicht deformierbare Verpackungsgüter von einem ersten Förderer abheben, und in ihrer Orientierung ungedreht auf einem zweiten Förderer ablegen. Hierfür wird ein Revolver von Saugerwagen verwendet, bei denen die die Verpackungsgüter greifenden Sauger um 90 Grad drehbar sind, damit die Orientierung der Verpackungsgüter erhalten bleibt. Der Stand der Technik ist für die Förderung von Seifenstücken vorgesehen. Diese Stücke weisen relativ ähnliche Dimensionen in Breite und Länge in der Ebene der Förderer auf.

Die Vorrichtung des Standes der Technik ist weniger geeignet, längliche oder extrem längliche Stückgüter zu transportieren. Dabei werden unter länglichen Stückgütern solche zu transportierenden Elemente verstanden, die ein Verhältnis der Längsdimension zur Querdimension von mindestens 4:1 und mehr, insbesondere von 10:1, und mehr aufweisen.

### Vorteile der Erfindung

Es ist, ausgehend von diesem Stand der Technik, Aufgabe der' Erfindung, eine Übergabevorrichtung zum Ergreifen von länglichen Stückgütern anzugeben, die die grosse Geschwindigkeitsdifferenz zwischen langsamem Zufuhrförderer und nachfolgendem Abfuhrförderer ohne Probleme kompensieren kann.

Bei einer Zufuhr von im wesentlichen quer transportierten länglichen Stückgütern, die eine Breite von beispielsweise 19 Millimetern und eine Länge von 152 Millimeter haben, und die mit einem Zwischenabstand von 19 Millimetern auf dem Zufuhrförderer und mit einem Zwischenabstand von 38 Millimetern auf dem Abfuhrförderer transportiert werden, besteht zwischen den beiden Förderern ein Geschwindigkeitsverhältnis von 38 zu 190, das heisst 1:5.

Diese Aufgabe löst eine Vorrichtung mit den Merkmalen des Anspruchs 1.

Die erfindungsgemässe Übergabevorrichtung weist ein Rad mit beweglichen Armen auf, die eine Tracking-Schwenkbewegung des Verbindungskörpers zum Aufnehmen (Picken), Drehen und positioniertem Ablegen der Produkte aufweist.

Vorzugsweise besteht eine Übergabevorrichtung zum Ergreifen von Stückgütern aus einem zentralen Radkörper, an dessen Peripherie eine Vielzahl von um jeweils eine erste Achse verschwenkbaren Armen angelenkt ist. Die Arme verfügen über einen Greifer zur Aufnahme von jeweils einem Stückgut oder mehreren Stückgütern. Jeder Greifer ist um eine zweite Achse für eine vorgegebene Orientierung der Stückgüter drehbar, während der Verbindungskörper um die erste Achse verdrehbar ist. Dann ist die Drehbewegung des Greifers über eine in der ersten Achse angeordnete Welle mit Hilfe eines Übertragungselementes auf den sich um die zweite Achse drehenden Greifer übertragbar.

Bei einer ersten Ausführungsform ist eine dritte Achse zwischen der ersten und zweiten Achse auf dem Verbindungskörper angeordnet. Damit wird eine gesteuerte Drehung des Verbindungskörpers über eine in der dritten Achse angeordnete Welle mit Hilfe eines Übertragungselementes auf den Verbindungskörper am Ort der ersten Achse möglich. Dies gestattet ein Mittracken von Stückgütern.

Damit können in einer Querlage zugeführte längliche Stückgüter in die Längsausrichtung umorientiert werden, beispielsweise zur Beschickung einer horizontalen Schlauchbeutelmaschine. Es ist dabei ein hoher Durchsatz erreichbar, von beispielsweise 600 Produkten je Minute, und es ist eine Abfuhrgeschwindigkeit von 100 Meter je Minute möglich, indem die grosse Geschwindigkeitsänderung, die sich durch die Umorientierung der länglichen Stückgüter von "quer" auf "längs" für eine "inline-Anordnung" für eine horizontale Schlauchbeutelmaschine ergibt, durch die mittrackenden Arme überbrückt wird.

Eine derartige Vorrichtung ist zum Übergeben solcher länglicher Stückgüter hervorragend geeignet.

Die Drehung und Ablage um 90 Grad wird aus praktischen Gründen häufig gewählt, ist aber in keiner Weise notwendig. Es können ebenfalls Winkel von beispielsweise 60 oder 120 Grad gewählt werden, wie auch Winkel zwischen diesen Werten.

Weitere vorteilhafte Ausführungsformen der erfindungsgemässen Vorrichtung und Varianten gehen aus den abhängigen Patentansprüchen hervor.

### Zeichnung

Ausführungsbeispiele der Erfindung sind in den Figuren dargestellt. Es zeigen:
- Fig. 1: eine perspektivische Ansicht der Übergabevorrichtung mit zwölf Armen gemäss einem ersten Ausführungsbeispiel der Erfindung;
- Fig. 2: eine perspektivische Ansicht der Übergabevorrichtung nach Fig. 1 in Vergrösserung, die vier Arme in grösserem Detail zeigt;
- Fig. 3: eine Explosionsansicht eines Armes nach Fig. 1;
- Fig. 4: eine Querschnittsansicht eines Arms der Übergabevorrichtung nach Fig. 1;
- Fig. 5: eine perspektivische Ansicht der Übergabevorrichtung mit zwölf Armen gemäss einem zweiten Ausführungsbeispiel der Erfindung;
- Fig. 6: eine perspektivische Ansicht der Übergabevorrichtung nach Fig. 5 in Vergrösserung, die vier Arme in grösserem Detail zeigt;
- Fig. 7: eine Explosionsansicht eines Armes nach Fig. 5;
- Fig. 8: eine Querschnittsansicht eines Arms der Übergabevorrichtung nach Fig. 5.

### Beschreibung der Ausführungsbeispiele

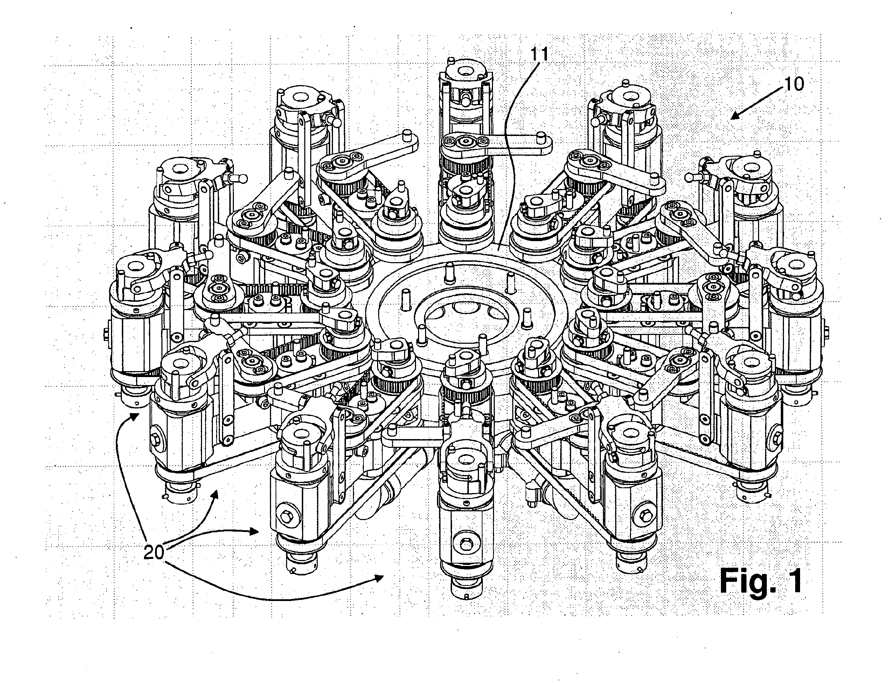

Die Fig. 1 zeigt in einer perspektivischen Ansicht die Übergabevorrichtung 10 mit zwölf Armen 20 gemäss einem ersten Ausführungsbeispiel der Erfindung. Die zwölf Arme 20 sind in ihrer horizontalen Ebene beweglich an einem zentralen Rad 11 angelenkt. Das Rad 11 ist um seine hier senkrechte Achse drehbar. Die Drehgeschwindigkeit kann variabel eingestellt werden, ist jedoch vorteilhafterweise konstant.

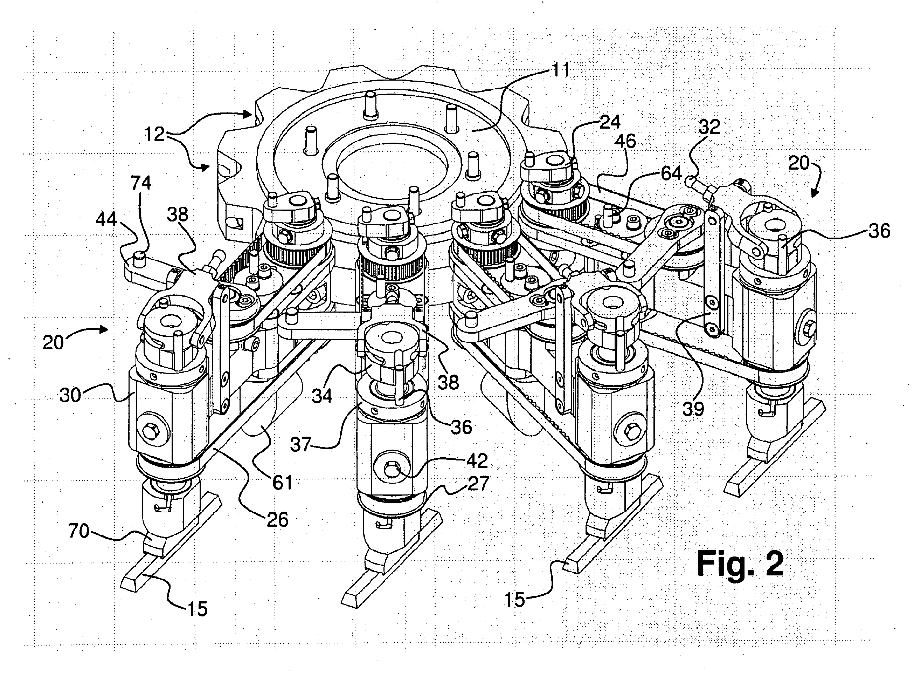

Die in der Fig. 2 dargestellten Stückgüter 15 liegen geordnet vor. Unter geordneter Anordnung wird in diesem Zusammenhang verstanden, dass die länglichen Stückgüter quer zur Transportrichtung des Zufuhrförderers angeordnet sind. Die Übergabevorrichtung 10 ist fähig, die Stückgüter vollständig in ihrer Längsrichtung ausgerichtet, hintereinander auf dem Abfuhrförderer abzulegen. Weitere Details der Arme 20 des ersten Ausführungsbeispiels werden im Zusammenhang mit den weiteren Fig. 2 bis 4 beschrieben. Gleiche Bezugszeichen bezeichnen dabei in allen Fig. die gleichen Merkmale.

Die Fig. 2 zeigt eine perspektivische Ansicht der Übergabevorrichtung 10 nach Fig. 1 in der Vergrösserung, die vier Arme in grösserem Detail zeigt. Insbesondere sind an dem Rad 11 die Aufnahmen 12 für die Arme 20 zu erkennen. Diese sind in den Aufnahmen 12 fest angeschraubt. Alle Dreh- und Verschwenkbewegungen werden durch Antriebe und Achsen innerhalb der Arme 20 gesteuert.

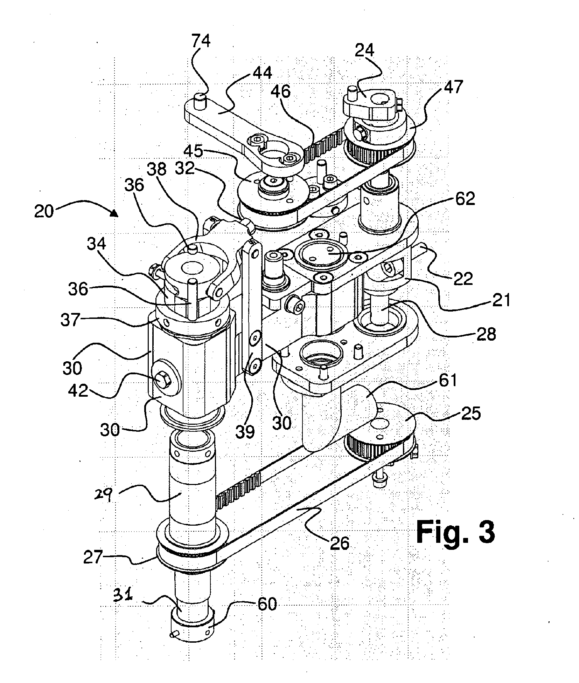

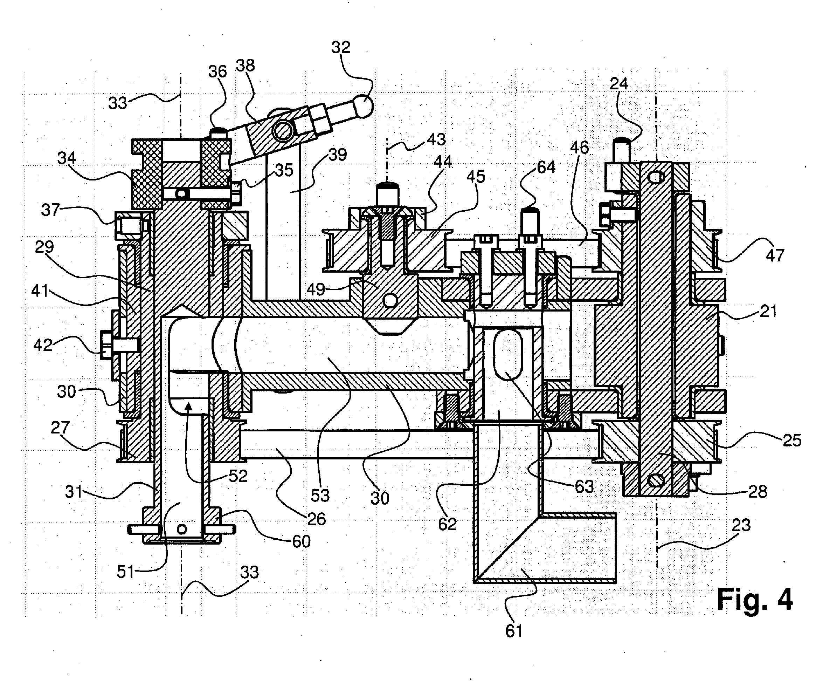

Dies wird im Zusammenhang mit der Fig. 3 erläutert, die eine Explosionsansicht eines einzelnen Armes 20 nach Fig. 1 zeigt. Ferner wird auf die Fig. 4 bezug genommen, die eine Querschnittsansicht des Arms 20 der Übergabevorrichtung 10 nach Fig. 1 zeigt. Alle Arme sind vorteilhafterweise identisch aufgebaut.

In der Darstellung der Fig. 3 sieht man die Befestigungshülse 21 des Armes 20 mit hier einer von zwei Befestigungsschrauben 22, mit denen die Befestigungshülse 21 an dem zentralen Rad 11 befestigbar ist. Die Befestigungshülse 21 umgibt koaxial eine innere Achse 23. Um diese innere, das heisst radnahe Achse 23, ist auch die innere Welle 28 angeordnet, die einstückig mit einem durch eine Kurve gesteuerten Hebel 24 verbunden ist. Dabei bedeutet "innen", dass diese Achse 23 nahe am Rad 11 angeordnet ist.

An der inneren Welle 28 ist ein erster Zahnkranz 25 befestigt. Somit wird eine Drehbewegung des Hebels 24 über den ersten Zahnkranz 25 auf den innen gezahnten ersten Treibriemen 26 übertragen, der einen zweiten Zahnkranz 27 antreibt. Beide Zahnkränze 25 und 27 weisen denselben Durchmesser auf. Somit wird eine Drehbewegung des Hebels 24 um einen bestimmten Winkel in eine identische Verdrehung der äusseren Welle 29 umgesetzt. Die äussere Welle 29, koaxial um die äussere Achse 33 angeordnet, wird in einer im wesentlichen horizontal und quer zu den ersten und zweiten Achsen 23 und 33 verlaufenden stabförmigen Armhülse 30 gelagert.

Äussere Welle 29 oder äussere Achse 33 bedeuten hierbei radfern, also auf der in bezug auf die innere Achse 23 gegenüberliegenden Seite der Nabe des Rades 11. Äussere Welle 29 und zweiter Zahnkranz 27 können einstückig ausgestaltet sein oder aus zwei getrennten aber miteinander verbundenen Elementen bestehen. Die Elemente 25, 26 und 27 bilden ein erstes Übertragungselement.

In der äusseren Welle 29 ist eine innere Hubwelle 31 geführt. Die Armhülse oder auch Verbindungskörper 30 ist auf grund der unten erwähnten Durchführung 53 eine Hülse, es kann sich aber auch um einen Verbindungskörper aus im wesentlichen Vollmaterial handeln. Die Hubwelle 31 ist über eine Fixierschraube 35 fest mit einem Gelenkträger 34 verbunden. In diesem Gelenkträger 34 sind gegenüberliegend zwei senkrecht mit wenig Spiel angeordnete Stifte 36 vorgesehen, die in dem oberen Flansch 37 der äusseren Welle 29 stecken, und vorzugsweise in einem Presssitz oder sonstwie mit Schrauben befestigt sind.

Somit wird durch diese Verbindung erreicht, dass die Drehung der äusseren Welle 29 direkt auf die Hubwelle 31 übertragen wird. Gleichzeitig ist diese Hubwelle 31 entlang der äusseren Drehachse 33 nach oben und unten beweglich angeordnet, indem in einem Bereich verdrehsicherer Formschluss zwischen Hubwelle 31 und äusserer Welle 29 vorgesehen ist.

Diese besagte translatorische Hubbewegung wird über den Gelenkträger 34 vermittelt, an dem horizontal ein gabelförmiger Verschwenkhebel 38 angelenkt ist, der mit Stegen 39 an dem Verbindungskörper 30 befestigt ist, hier beidseitig. Über die durch die Stege 39 vorgegebene starre Querachse steht an dem Verschwenkhebel 38 ein Betätigungshebel 32 über, mit dem somit dieser Hub steuerbar ist.

Unter kurzem Verweis auf die Fig. 2 ist festzuhalten, dass dort die beiden dargestellten äussersten äusseren Wellen 29 (ganz links und ganz rechts) jeweils wie in der Fig. 3 dargestellt unten liegen und somit auf dem Flansch 37 aufliegen. Die beiden in der Mitte dargestellten äusseren Wellen 29 dagegen sind hochgezogen, das heisst das angesaugte Stückgut 15 befindet sich räumlich weitaus höher als die anderen (äusseren) Stückgüter 15. Eine Exzenterbüchse 41 mit Einstellschraube 42 spannt den ersten Riemen 26 durch Druck auf den Verbindungskörper 30.

Mittig auf der Armhülse 30 ist ein mittlerer Schaft 49 aufgesetzt, der mit ihr einen dritten Zahnkranz 45 an somit mittlerer Position trägt. Der dritte Zahnkranz 45 ist um den mittleren Schaft 49 und somit die mittlere Achse 43 drehbar. "Mittlere" bedeutet in diesem Zusammenhang eine Anordnung zwischen den Achsen 23 und 33 an den freien Enden des Verbindungskörpers 30. Die Anordnung der dritten Achse 43 zwischen der ersten und der zweiten Achse 23 beziehungsweise 33 bedeutet nicht notwendigerweise eine Anordnung auf der direkten Linie zwischen den beiden genannten Achsen 23 und 33 sondern auch eine eventuell nicht ortsfeste dritte Achse 43, die im wesentlichen im Bereich zwischen den besagten Achsen 23 und 33 angeordnet ist.

Der dritte Zahnkranz 45 ist über einen zweiten Riemen 46 mit einem vierten Zahnkranz 47 verbunden, der koaxial um die innere Achse 23 angeordnet ist. Der dritte Zahnkranz 45 ist über einen durch eine Plankurve steuerbaren Hebel 44 drehbar. Da der dritte Zahnkranz 45 auf der Armhülse 30 abstandsfest zur inneren Achse 23 aber um seine Hauptachse drehbar angeordnet ist, der vierte Zahnkranz 47 aber mit der Befestigungshülse 21 und nicht mit der Armhülse 30 fest verbunden ist, bewirkt eine Drehung des Hebels 44 eine direkte Verschwenkbewegung der Armhülse 30 und damit des gesamten Arms 20 um den Befestigungspunkt am zentralen Rad 11. Die Elemente 45, 46 und 47 bilden ein zweites Übertragungselement.

Die Hubwelle 31 ist in ihrem unteren bis mittleren Teil innen hohl. Sie weist einen koaxial von einem Mantel umgebenen, nach unten offenen Hohlraum 51 auf. An dem unteren Abschnitt der Hubwelle 31 ist ein Flansch 60 vorgesehen, an dem in bekannter Weise ein Sauger oder Greifer angeordnet werden kann. Daher wird im Sinne einer Vereinfachung hier teilweise von der Greifeinrichtung 60 gesprochen. Korrekterweise ist auf die Fig. 2 zu verweisen, wo auf dem Flansch 60 eine Saugeinrichtung 70 angeordnet ist.

Im mittleren Teil der Hubwelle 31 ist der Mantel der Hubwelle 31 auch seitlich offen, so dass sich der Hohlraum 51 seitlich öffnet, was mit dem Bezugszeichen 52 angedeutet ist. Damit steht der Hohlraum 51 in direktem Kontakt mit der horizontal angeordneten, von der Armhülse 30 ummantelten Durchführung 53. Die Durchführung 53 geht in den Rohranschluss 61 über, der hier L-förmig an eine in den Zeichnungen nicht dargestellte Vakuumpumpe oder entsprechende Anschlüsse geführt wird.

Der Übergang zwischen Durchführung 53 und Rohranschluss 61 wird durch die Vakuumsteuerhülse 62 geschaffen, die einen nach unten offenen und ansonsten geschlossenen Mantel aufweist und über mindestens eine Vakuumsteueröffnung 63 verfügt. Die Vakuumsteuerhülse 62 ist in der Armhülse 30 drehbar gelagert und kann über einen Betätigungsbolzen 64 von oben gedreht werden. In der in der Fig. 4 dargestellten Position ist die Vakuumsteuerhülse 62 geschlossen.

Anstelle der hier dargestellten Einrichtungen zur Ansteuerung einer Saugeinrichtung 70 kann auch anstelle von einer bevorzugten Saugeinrichtung 70 eine andere bekannte Greifeinrichtung vorgesehen werden.

Zusammenfassend sind somit bei jedem Arm 20 einer Übergabevorrichtung 10 folgende Bewegungen möglich: Ein Antrieb des Hebels 24 an der inneren Achse 23 führt schliesslich zu einer Drehbewegung des Flansches 60 mit der Greifeinrichtung oder Sauger 70. Ein Verschwenken des Hebels 44 führt nun im Gegenzug dazu, da die vier Zahnkränze 25, 27 und 45, 47 alle den gleichen Durchmesser aufweisen, dass sich die Armhülse um einen entsprechenden gleichen Winkel zurückdreht, so dass die Ausrichtung der äusseren Achse 33 und damit des Saugers 70 (gesehen an Position des Flansches 60) im Raum bezüglich der Achse des Rades 11 in einfacher Weise einstellbar wird. Somit kann hier gegenüber aufzunehmenden Stückgütern 15 sehr einfach ein Mittracking stattfinden.

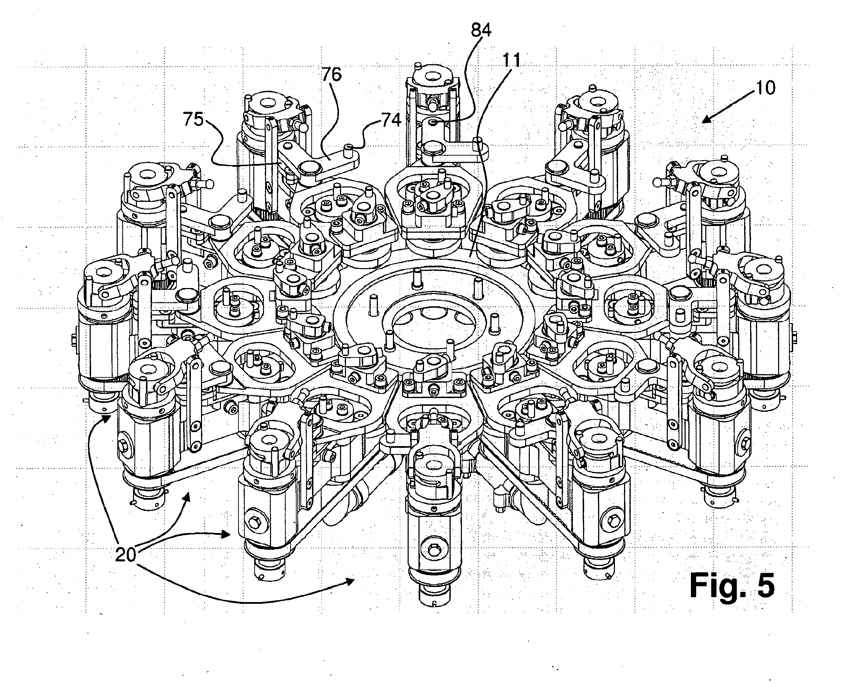

Die Fig. 5 zeigt in einer perspektivischen Ansicht die Übergabevorrichtung 10 mit zwölf Armen 20 gemäss einem zweiten Ausführungsbeispiel der Erfindung. Die zwölf Arme 20 sind in ihrer horizontalen Ebene beweglich an einem zentralen Rad 11 angelenkt. Das Rad 11 ist um seine hier senkrechte Achse drehbar. Ein Unterschied zwischen den beiden hier beschriebenen Ausführungsbeispielen liegt in der mittleren Achse 43, die hier gegenüber der Armhülse 30 nicht unbeweglich angeordnet ist, und wobei die Ansteuerung über einen Kniehebel 76 vorgenommen wird, an dem ausserzentrisch zu der Armhülse 30 ein Betätigungsbolzen 74 vorgesehen ist, während die Mitte der hier gleich langen Arme des Kniehebels 76 über einen Bolzen 77 mit dem Betätigungshebel 80 verbunden ist. Diese Elemente 76, 77 und 80 bilden ein zweites Übertragungselement gemäss dem zweiten Ausführungsbeispiel.

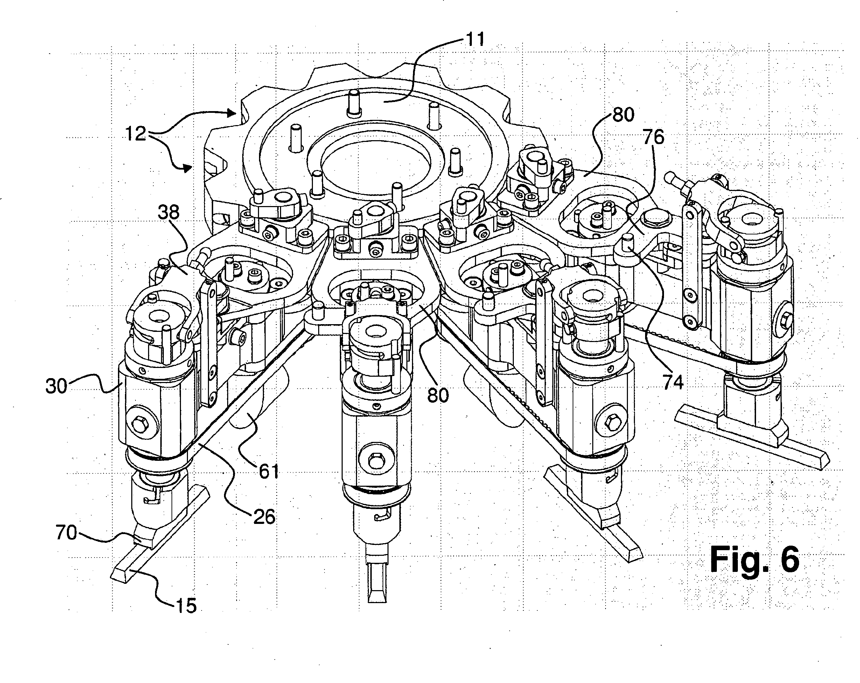

Weitere Details der Arme 20 werden im Zusammenhang mit den weiteren Fig. 6 bis 8 beschrieben. In beiden Ausführungsbeispielen verwendete identische Bezugszeichen bezeichnen dabei gleiche Bauelemente, die sich aber in einzelnen Merkmalen unterscheiden können.

Die Fig. 6 zeigt eine perspektivische Ansicht der Übergabevorrichtung 10 nach Fig. 5 mit vier Armen 20 in grösserem Detail. Insbesondere sind an jedem Arm 20 Übertragungshebel 80 zu erkennen, die einen wesentlichen Unterschied des zweiten Ausführungsbeispiels gegenüber dem ersten Ausführungsbeispiel ausmachen.

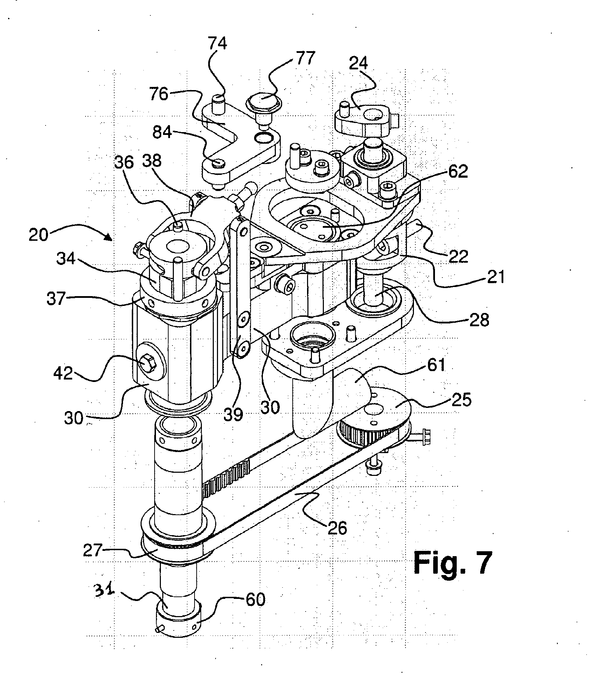

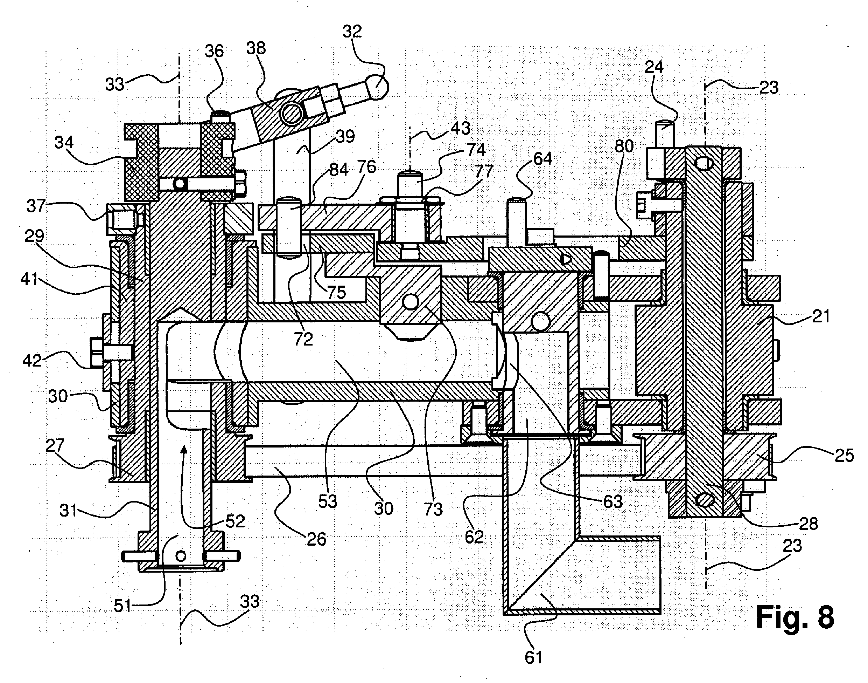

Dies wird im Zusammenhang mit den Fig. 7 und 8 näher erläutert, die respektive eine Explosionsansicht und eine Querschnittsansicht eines einzelnen Armes 20 nach Fig. 5 zeigen.

In der Darstellung der Fig. 7 sieht man die Befestigungshülse 21 des Armes 20 mit hier einer von zwei Befestigungsschrauben 22, mit denen die Befestigungshülse 21 an dem zentralen Rad 11 befestigbar ist. Die Übertragung einer Bewegung des ersten Zahnkranzes 25 auf einen zweiten Zahnkranz 27 ist wie beim ersten Ausführungsbeispiel ausgebildet. Dies gilt auch für die Verbindung mit der Armhülse oder Verbindungskörper 30 an der äusseren Achse 33. Die oben beschriebene translatorische Hubbewegung wird auch hier über den Gelenkträger 34 vermittelt, an dem horizontal ein gabelförmiger Verschwenkhebel 38 angelenkt ist, der mit Stegen 39 an dem Verbindungskörper 30 befestigt ist.

In eine Öffnung in der Befestigungshülse 30 ist ein Halteeinsatz 73 drehfest aufgesetzt, welcher fest mit einem in Richtung der äusseren Achse 33 ausgerichteten Arm 75 verbunden ist. Der Halteeinsatz 73 und der Arm 75 können natürlich auch einstückig sein. In dem Arm 75 ist ein zwischen Achsen 23 und 33 ausgerichtetes Langloch 72 vorgesehen, in dem ein Stift 84 eingesetzt und geführt wird, der in einen Arm des Kniehebels 76 eingreift, der demgemäss verschwenken kann. Das Langloch 72 könnte auch in der Befestigungshülse 30 integriert sein oder an diesem Ort in einem überstehenden Ansatz realisiert werden.

Der Kniehebel 76 ist über einen Bolzen 77 mit dem Übertragungshebel 80 verbunden, der dadurch über einen durch eine Plankurve steuerbaren, an dem anderen Armende des Kniehebels 76 vorgesehenen Betätigungsbolzen 74 drehbar ist. Da der Betätigungsbolzen 74 durch die Anlenkung über Arm 75 und Kniehebel 76 gegenüber der Armhülse 30 verschwenkbar angeordnet ist, der Übertragungshebel 80 aber mit der Befestigungshülse 21 im Bereich der Achse 23 fest verbunden ist, bewirkt eine Drehung des Betätigungsbolzens 74 eine direkte Verschwenkbewegung der Armhülse 30 und damit des gesamten Arms 20. Die dritte mittlere Achse 43 ist somit jeweils an dem Ort des Bolzens 77 realisiert; dieser Bolzen ist nun gegenüber dem ersten Ausführungsbeispiel nicht ortsfest, sondern verändert seine Lage mit dem Verschwenken des Hebels 80 gemäss dessen Winkelstellung.

Die Hubwelle 31 ist in ihrem unteren bis mittleren Teil innen hohl. Sie ist bis zum Rohranschluss 61 wie in dem ersten Ausführungsbeispiel ausgestaltet, wobei die Vakuumsteuerhülse 62 hier mit ihrer Vakuumsteueröffnung 63 in der Fig. 8 dargestellten Position geöffnet ist. Der Betätigungsbolzen 64 ragt dabei durch eine entsprechende Öffnung durch den Übertragungshebel 80 hindurch, um von oben ergriffen zu werden.

Zusammenfassend sind somit bei jedem Arm 20 einer Übergabevorrichtung 10 nach den Fig. 5 bis 8 folgende Bewegungen möglich: Ein Antrieb des Hebels 24 an der inneren Achse 23 führt schliesslich zu einer Drehbewegung des Flansches 60 mit der Greifeinrichtung oder Sauger 70. Ein Verschwenken des Bolzens 74 führt nun im Gegenzug dazu, dass sich die Armhülse 30 um einen Winkel vor- und zurückdreht, so dass die Ausrichtung der äusseren Achse 33 und damit des Saugers (gesehen an Position des Flansches 60) im Raum bezüglich der Achse des Rades 11 in einfacher Weise einstellbar wird. Somit kann hier gegenüber aufzunehmenden Stückgütern 15 sehr einfach ein Mittracking stattfinden.

Wesentlich ist bei allen Ausführungsbeispielen, welche der Fachmann basierend auf der vorliegenden Erfindung ausbilden kann, dass ein Rad 11 mit einer Vielzahl von (hier zwölf) Armen 20 mit hoher Geschwindigkeit angeförderte längliche Stückgüter schnell umorientieren kann, so dass diese mit relativ dazu weitaus höherer Geschwindigkeit abgefördert werden können. Natürlich ist die Anzahl von zwölf Armen keine Notwendigkeit, es kann auch eine andere Anzahl von Armen, beispielsweise acht Arme 20 oder sechzehn Arme 20, Verwendung finden.

Wie aus dem oben Beschriebenen hervorgeht, ist die entsprechende Vorrichtung unabhängig von den eingesetzten weiteren Mitteln der Verpackungsanlage. Dies betrifft sowohl die Art des.zuführenden Transportbandes als auch die eigentliche Pickeinrichtung oder das stromabwärtige Transportband.

Anstelle der Zahnkränze 25, 27, 45 und 47 können auch Umlenkrollen vorgesehen werden, bei denen die Riemen 26, 46 nur unter Spannung stehend mitgenommen werden. Anstelle der Riemen 26, 46 können auch Ketten oder andere treibende form- oder kraftschlüssige Elemente Verwendung finden.

### Bezugszeichen-Liste

- 10: Übergabevorrichtung
- 11: zentrales Rad
- 12: Aufnahme für einen Arm
- 15: längliches Stückgut
- 20: Arm
- 21: Befestigungshülse
- 22: Befestigungsschraube
- 23: innere Achse
- 24: Hebel
- 25: erster Zahnkranz
- 26: erster Treibriemen
- 27: zweiter Zahnkranz
- 28: innere Welle
- 29: äussere Welle
- 30: Armhülse, Verbindungskörper
- 31: Hubwelle
- 32: Betätigungshebel
- 33: äussere Achse
- 34: Gelenkträger
- 35: Fixierschraube
- 36: Stift
- 37: Flansch
- 38: Verschwenkhebel
- 39: Steg
- 41: Exzenterbüchse
- 42: Einstellschraube
- 43: mittlere Achse
- 44: Hebel
- 45: dritter Zahnkranz
- 46: zweiter Riemen
- 47: vierter Zahnkranz
- 49: mittlerer Schaft
- 51: Hohlraum
- 52: seitliche Öffnung
- 53: Durchführung
- 60: Flansch
- 61: Rohranschluss
- 62: Vakuumsteuerhülse
- 63: Vakuumsteueröffnung
- 64: Betätigungsbolzen
- 70: Saugeinrichtung
- 72: Langloch
- 73: Halteeinsatz
- 74: Betätigungsbolzen
- 75: Arm
- 76: Kniehebel
- 77: Bolzen
- 80: Übertragungshebel
- 84: Stift

## Patentansprüche

1. Übergabevorrichtung (10) zum Ergreifen von Stückgütern (15) von einem ersten in eine erste Richtung weisenden Zufuhrförderer, und zum nachfolgenden Ablegen derselben (15) auf einem zweiten in eine zweite Richtung weisenden Abfuhrförderer, bestehend aus einem sich in einer Drehebene drehenden zentralen Radkörper (11), an dessen Peripherie (12) eine Vielzahl von um eine senkrecht zur Drehebene angeordnete erste Achse (23) verschwenkbaren (21) Armen (20) angelenkt ist, wobei die Arme (20) über jeweils mindestens eine Greifeinrichtung (60, 70) verfügen, mit denen jeweils mindestens ein Stückgut (15) aufgenommen werden kann, wobei jeder Arm (20) zudem eine zweite zur ersten Achse parallele Achse (33) aufweist und wobei auf der besagten zweiten Achse (33) eine die Greifeinrichtung (60, 70) tragende Hülse (31) angeordnet ist, die für eine vorgegebene Orientierung der Stückgüter (15) drehbar ist, **dadurch gekennzeichnet, dass** jeder bewegliche Arm (20) als ein um die erste Achse (23) verdrehbarer Verbindungskörper (30) ausgestaltet ist, dass die Drehbewegung der Greifeinrichtung (60, 70) von einer in der ersten Achse (23) angeordneten Welle (28) mit Hilfe eines ersten Übertragungselementes (25, 26, 27) auf die sich um die zweite Achse (33) drehende Hülse (31) übertragbar ist, dass eine dritte Achse (43) zwischen der ersten und zweiten Achse (23, 33) angeordnet ist und dass eine gesteuerte Drehbewegung des Verbindungskörpers (30) über eine in der dritten Achse (43) angeordnete Welle (49, 77) mit Hilfe eines zweiten Übertragungselementes (45, 46, 47; 76, 77, 80) auf ein an dem zentralen Radkörper (11) befestigbares und koaxial um die erste Achse (23) drehbar angeordnetes Element (21; 47, 80) übertragbar ist.

2. Vorrichtung nach Anspruch 1, **dadurch gekennzeichnet, dass** der Radkörper (11) mit einer konstanten Drehgeschwindigkeit antreibbar ist.

3. Vorrichtung nach einem der Ansprüche 1 oder 2, **dadurch gekennzeichnet**, auf der zweiten Achse (33) die Greifeinrichtung (60, 70) translatorisch entlang der zweiten Achse (33) verschiebbar ist, wobei die Greifeinrichtung (60) kraftschlüssig oder formschlüssig mit der zweiten Achse (33) verbunden ist.

4. Vorrichtung nach Anspruch 3, **dadurch gekennzeichnet, dass** die Greifeinrichtung (60, 70) über einen durch eine Kulissenführung, insbesondere eine Trommelkurve, gesteuerten Hebel (32) translatorisch bewegbar ist.

5. Vorrichtung nach einem der Ansprüche 1 bis 4, **dadurch gekennzeichnet, dass** die Greifeinrichtung (60, 70) eine Saugereinrichtung (70) ist.

6. Vorrichtung nach Anspruch 5, **dadurch gekennzeichnet, dass** der Verbindungskörper (30) mit einem inneren Hohlraum (53) versehen ist und dass die Greifeinrichtung (60) eine mit dem besagten Hohlraum (53) in Verbindung stehende Hülse (31) ist, so dass von einem radnahen Element (61) eine Verbindung zur Vakuumerzeugung in der Saugereinrichtung einrichtbar ist.

7. Vorrichtung nach Anspruch 6, **dadurch gekennzeichnet, dass** am Übergang vom Hohlraum (53) im Verbindungskörper (30) zu dem radnahen Element (61) ein Ventil (62) vorgesehen ist, welches durch ein an dem Verbindungskörper (30) vorgesehenes Betätigungselement (64) schaltbar ist.

8. Vorrichtung nach einem der Ansprüche 1 bis 7, **dadurch gekennzeichnet, dass** die dritte Achse (43) im Abstandsbereich zwischen 1/3 und 2/3, bevorzugt in der Mitte, zwischen erster (23) und zweiter (33) Achse angeordnet ist.

9. Vorrichtung nach einem der Ansprüche 1 bis 8, **dadurch gekennzeichnet, dass** die dritte Achse (43) über einen durch eine Plankurve gesteuerten Hebel (44) drehbar ist.

10. Vorrichtung nach einem der Ansprüche 1 bis 8, **dadurch gekennzeichnet, dass** der Ort der dritten Achse (43) gemäss der Drehung des Elementes (21; 47, 80) veränderbar ist.

11. Vorrichtung nach einem der Ansprüche 1 bis 10, **dadurch gekennzeichnet, dass** die Übertragungselemente (25, 26, 27 beziehungsweise 45, 46, 47) aus Umlenkrollen oder Zahnkränzen bestehen, die über Treibriemen oder Zahnriemen miteinander verbunden sind.

12. Vorrichtung nach Anspruch 11, **dadurch gekennzeichnet, dass** die Umlenkrollen oder Zahnkränze zueinander identisch ausgestaltet sind.

13. Vorrichtung nach Anspruch 11 oder 12, **dadurch gekennzeichnet, dass** die Riemenspannung des ersten Übertragungselementes (25, 26, 27) über eine auf der zweiten Achse (33) angeordnete Exzenterbüchse (41, 42) einstellbar ist.

14. Vorrichtung nach einem der Ansprüche 1 bis 13, **dadurch gekennzeichnet, dass** die Förderer Transportbänder oder Transportketten mit in Abständen angeordneten Mitnehmern sind.

15. Vorrichtung nach einem der vorherigen Ansprüche, **dadurch gekennzeichnet, dass** der Zufuhrförderer und der Abfuhrförderer einen Winkel von 90 Grad einschliessen.

16. Vorrichtung nach einem der vorherigen Ansprüche, **dadurch gekennzeichnet, dass** die Zwangssteuerung des ersten Übertragungselementes (25, 26, 27) über einen Hebel (24) ausgelegt ist, um die Ausrichtung der länglichen Stückgüter während der Übergabe vom Zufuhrförderer zum Abfuhrförderer unverändert zu halten.

17. Vorrichtung nach einem der vorherigen Ansprüche, **dadurch gekennzeichnet, dass** die Zwangssteuerung des zweiten Übertragungselementes (45, 46, 47; 76, 77, 80) über einen Hebel (76) ausgelegt ist, um die Ausrichtung der länglichen Stückgüter während der Übergabe vom Zufuhrförderer zum Abfuhrförderer unverändert zu halten.

## Claims

1. Transfer arrangement (10) for grasping articles (15) from a first feed conveyer pointing in a first direction, and for subsequently depositing the same (15) on a second removal conveyer pointing in a second direction, said transfer arrangement comprising a central wheel body (11) which rotates in a plane of rotation with, coupled to the periphery (12) thereof, a multiplicity of arms (20) which are pivotable (21) about a first axis (23) arranged perpendicular to the plane of rotation, wherein the arms (20) each have at least one gripping device (60, 70) with which in each case at least one article (15) can be picked up, wherein each arm (20) also has a second axis (33) parallel to the first axis, and wherein a sleeve (31) supporting the gripping device (60, 70) is arranged on the said second axis (33) and can be rotated for predetermined orientation of the articles (15),
**characterized in that** each movable arm (20) is configured as a connecting body (30) which can be rotated about the first axis (23), **in that** the rotational movement of the gripping device (60, 70) can be transmitted with the aid of a first transmission element (25, 26, 27) from a shaft (28) arranged on the first axis (23) to the sleeve (31) rotating about the second axis (33), **in that** a third axis (43) is arranged between the first and second axes (23, 33), and **in that** a controlled rotational movement of the connecting body (30) can be transmitted with the aid of a second transmission element (45, 46, 47; 76, 77, 80) via a shaft (49, 77) arranged on the third axis (43) to an element (21; 47, 80) which can be fastened to the central wheel body (11) and is arranged such that it can be rotated coaxially about the first axis (23).

2. Arrangement according to Claim 1, **characterized in that** the wheel body (11) can be driven at a constant rotational speed.

3. Arrangement according to either of Claims 1 and 2, **characterized in that** the gripping device (60, 70) can be displaced on the second axis (33) in a translatory manner along the second axis (33), the gripping device (60) being connected frictionally or in an interlocking manner to the second axis (33).

4. Arrangement according to Claim 3, **characterized in that** the gripping device (60, 70) can be moved in a translatory manner via a lever (32) controlled by a slotted guide mechanism, in particular a drum cam.

5. Arrangement according to one of Claims 1 to 4, **characterized in that** the gripping device (60, 70) is a suction device (70).

6. Arrangement according to Claim 5, **characterized in that** the connecting body (30) is provided with an inner hollow space (53), and **in that** the gripping device (60) is a sleeve (31) which is connected to said hollow space (53) such that a connection can be set up by an element (61) in the vicinity of the wheel in order to generate a vacuum in the suction device.

7. Arrangement according to Claim 6, **characterized in that** a valve (62) is provided at the transition from the hollow space (53) in the connecting body (30) to the element (61) in the vicinity of the wheel, said valve being switchable by an actuating element (64) provided on the connecting body (30).

8. Arrangement according to one of Claims 1 to 7, **characterized in that** the third axis (43) is arranged in the spacing range of between 1/3 and 2/3, preferably in the centre between the first axis (23) and second axis (33).

9. Arrangement according to one of Claims 1 to 8, **characterized in that** the third axis (43) can be rotated via a lever (44) controlled by a face cam.

10. Arrangement according to one of Claims 1 to 8, **characterized in that** the location of the third axis (43) can be changed in accordance with the rotation of the element (21; 47, 80).

11. Arrangement according to one of Claims 1 to 10, **characterized in that** the transmission elements (25, 26, 27 and 45, 46, 47) comprise deflecting rollers or toothed rings which are connected to one another via driving belts or toothed belts.

12. Arrangement according to Claim 11, **characterized in that** the deflecting rollers or toothed rings are of identical configuration to one another.

13. Arrangement according to Claim 11 or 12,
**characterized in that** the belt tensioning of the first transmission element (25, 26, 27) can be set via an eccentric bushing (41, 42) arranged on the second axis (33).

14. Arrangement according to one of Claims 1 to 13, **characterized in that** the conveyers are transport belts or transport chains with drivers arranged at distances.

15. Arrangement according to one of the preceding claims, **characterized in that** the feed conveyer and the removal conveyer enclose an angle of 90°.

16. Arrangement according to one of the preceding claims, **characterized in that** the first transmission element (25, 26, 27) is forcibly controlled via a lever (24) in order to keep the orientation of the elongate articles unchanged during the transfer from the feed conveyer to the removal conveyer.

17. Arrangement according to one of the preceding claims, **characterized in that** the second transmission element (45, 46, 47; 76, 77, 80) is forcibly controlled via a lever (76) in order to keep the orientation of the elongate articles unchanged during the transfer from the feed conveyer to the removal conveyer.

## Revendications

1. Dispositif de transfert (10) pour saisir des articles (15) d'un premier transporteur d'alimentation tourné dans une première direction, et pour déposer ensuite ceux-ci (15) sur un deuxième transporteur d'évacuation tourné dans une deuxième direction, constitué d'un corps de roue central (11) tournant dans un plan de rotation, sur la périphérie (12) duquel est articulée une pluralité de bras (20) pouvant pivoter (21) autour d'un premier axe (23) disposé perpendiculairement au plan de rotation, les bras (20) disposant d'au moins un dispositif de préhension (60, 70), avec lesquels à chaque fois au moins un article (15) peut être reçu, chaque bras (20) présentant en outre un deuxième axe (33) parallèle au premier axe, et ledit deuxième axe (33) recevant une douille (31) portant le dispositif de préhension (60, 70), laquelle peut tourner pour permettre une orientation prédéfinie des articles (15),
**caractérisé en ce que** chaque bras mobile (20) est configuré sous forme de corps de liaison (30) pouvant tourner autour du premier axe (23), **en ce que** le mouvement de rotation du dispositif de préhension (60, 70) peut être transmis d'un arbre (28) disposé dans le premier axe (23) à l'aide d'un premier élément de transfert (25, 26, 27) à la douille (31) tournant autour du deuxième axe (33), **en ce qu'**un troisième axe (43) est disposé entre le premier et le deuxième axe (23, 33) et **en ce qu'**un mouvement de rotation commandé du corps de liaison (30) peut être transféré par le biais d'un arbre (49, 77) disposé dans le troisième axe (43) à l'aide d'un deuxième élément de transfert (45, 46, 47 ; 76, 77, 80) à un élément (21 ; 47, 80) pouvant être fixé sur le corps de roue central (11) et disposé coaxialement de manière à pouvoir tourner autour du premier axe (23).

2. Dispositif selon la revendication 1, **caractérisé en ce que** le corps de roue (11) peut être entraîné avec une vitesse de rotation constante.

3. Dispositif selon l'une quelconque des revendications 1 ou 2, **caractérisé en ce que** le dispositif de préhension (60, 70) sur le deuxième axe (33) peut être déplacé en translation le long du deuxième axe (33), le dispositif de préhension (60) étant connecté par engagement par force ou par correspondance géométrique avec le deuxième axe (33).

4. Dispositif selon la revendication 3, **caractérisé en ce que** le dispositif de préhension (60, 70) peut être déplacé en translation par le biais d'un levier (32) commandé par un guide à coulisse, notamment une came de tambour.

5. Dispositif selon l'une quelconque des revendications 1 à 4, **caractérisé en ce que** le dispositif de préhension (60, 70) est un dispositif d'aspiration (70).

6. Dispositif selon la revendication 5, **caractérisé en ce que** le corps de liaison (30) est pourvu d'une cavité interne (53) et **en ce que** le dispositif de préhension (60) est une douille (31) en liaison avec ladite cavité (53), de sorte qu'une connexion pour produire du vide dans le dispositif d'aspiration puisse être établie par un élément (61) proche de la roue.

7. Dispositif selon la revendication 6, **caractérisé en ce qu'**une soupape (62) est prévue au niveau de la transition de la cavité (53) dans le corps de liaison (30) à l'élément (61) proche de la roue, laquelle soupape peut être commutée par un élément d'actionnement (64) prévu sur le corps de liaison (30).

8. Dispositif selon l'une quelconque des revendications 1 à 7, **caractérisé en ce que** le troisième axe (43) est disposé à une distance comprise entre 1/3 et 2/3, de préférence au milieu, entre le premier (23) et le deuxième axe (33).

9. Dispositif selon l'une quelconque des revendications 1 à 8, **caractérisé en ce que** le troisième axe (43) peut être tourné par le biais d'un levier (44) commandé par une courbe plane.

10. Dispositif selon l'une quelconque des revendications 1 à 8, **caractérisé en ce que** la position du troisième axe (43) peut être modifiée en fonction de la rotation de l'élément (21 ; 47, 80).

11. Dispositif selon l'une quelconque des revendications 1 à 10, **caractérisé en ce que** les éléments de transfert (25, 26, 27, respectivement 45, 46, 47) se composent de poulies de renvoi ou de couronnes dentées qui sont connectées les unes aux autres par le biais de courroies d'entraînement ou de courroies dentées.

12. Dispositif selon la revendication 11, **caractérisé en ce que** les poulies de renvoi ou les couronnes dentées sont identiques les unes aux autres.

13. Dispositif selon la revendication 11 ou 12,
**caractérisé en ce que** la tension de la courroie du premier élément de transfert (25, 26, 27) peut être ajustée par le biais d'une douille d'excentrique (41, 42) disposée sur le deuxième axe (33).

14. Dispositif selon l'une quelconque des revendications 1 à 13, **caractérisé en ce que** les transporteurs constitués par les bandes transporteuses ou les chaînes transporteuses sont des dispositifs d'entraînement disposés à distance les uns des autres.

15. Dispositif selon l'une quelconque des revendications précédentes, **caractérisé en ce que** le transporteur d'alimentation et le transporteur d'évacuation forment un angle de 90 degrés.

16. Dispositif selon l'une quelconque des revendications précédentes, **caractérisé en ce que** la commande forcée du premier élément de transfert (25, 26, 27) est réalisée par le biais d'un levier (24) afin de maintenir inchangée l'orientation des articles longs pendant le transfert du transporteur d'alimentation au transporteur d'évacuation.

17. Dispositif selon l'une quelconque des revendications précédentes, **caractérisé en ce que** la commande forcée du deuxième élément de transfert (45, 46, 47 ; 76, 77, 80) est réalisée par le biais d'un levier (76) afin de maintenir inchangée l'orientation des articles longs pendant le transfert du transporteur d'alimentation au transporteur d'évacuation.
